# EUROPEAN PATENT SPECIFICATION

(11) **EP 1 897 749 B1**
(45) Date of publication and mention of the grant of the patent: **09.11.2011**
(21) Application number: 07253544.6
(22) Date of filing: 07.09.2007
(51) Int. Cl.: B60P 1/52, B62B 3/00, B62B 3/06

(54) **Load handling trolley**
Wagen zur Handhabung von Lasten
Chariot de manipulation de charges

(30) Priority: 08.09.2006 GB 0617661
(43) Date of publication of application: 12.03.2008
(73) Proprietor: Blackrock Engineering Limited, Great Budworth, Nr. Northwich, Cheshire CW9 6HF (GB)
(72) Inventor: Kordel, Wojtek Josef, Nr. Northwich, Cheshire CW9 6HF (GB)
(74) Representative: Bray, Richard Anthony

(56) References cited:
- EP-A- 0 133 042
- EP-A- 1 251 056

## Description

This invention concerns load-haodling trolleys of the type that normally run in channel tracks and comprise elongate load engagers raisable and lowerable relative to bogies via ramp-and-roller means when the engager and the bogies are caused to move longitudinally relative to each other.

Successful and well-known examples of such trolley-in-track systems are available under the Registered Trade Mark JOLODA.

A strong reasonably flat floor into which the tracks are let and reasonably rigid loads, such as containers or pallets, have led to remarkably low-profile trolleys in quite shallow tracks as only a small lift height has been adequate to give a free travel clearance for the load over the floor after insertion of and raising the trolley.

There is now a tendency, dictated by seeking minimum costs of floors, pallets and containers, for floors and pallets to be less rigid, so that flexing or sagging can result in hitherto satisfactory lifting heights being insufficient always to avoid load-to-floor contact during movement of loads by the trolley.

The success and reputation of JOLODA trolleys is based on sound and well engineered design involving, inter alia, close interfitment of bogie side walls and depending walls of inverted channel section load engagers, virtually flush bottoms of such walls in the unraised state of the trolleys, and in one design positive retention means between those side and depending walls, but the limits set by rigid pin-and-ledge, groove or slot type positive retention means preclude achievement of desired amounts of increased lift.

Accordingly our high lift trolley utilised positive retention means that is basically characterised by including a device having one component that is anchored and at least one other relatively movable component connected thereto and coupled to a trolley part so as to move during relative movement of the engager and bogie assembly.

It is evident that, for greater lift within the same basic trolley height, the ramp means must more nearly approach the available height of the space within the inverted channel type load engagers encompassing the bogies, though we prefer that it should remain slightly less so that positive lateral location of sides of the bogies remain even approaching and at full height of the trolley, due to overlap by the depending sides of the load engager, which are preferably closely adjacent thereto throughout their length. Lift height will usually be greater on approach if, as is preferred, the ramps have locating depressions at full height.

More particularly we have utilised retention means in the form of spring links engaging and effectively in guiding/retaining engagement with rollers of the bogies, encompassing axles or rods thereof in a slot of the links otherwise anchored, clamped under wedges with which the rollers co-act. The basic action of such an embodiment comprises a flexing of the spring retainers for roller-axles as the bogies rollers mount ramps of the load engager.

It is accepted that our trolleys will inevitably be subjected to extremely rough treatment, even dropped, if not thrown onto concrete floors, and we take great pride in the fact that our trolleys can readily with stand such treatment without failure or breakage.

In that spirit, and for such treatment, we prefer to guard against the possibility that the bogies can then be forced out of, "flirted" from, positions corresponding to design maxima, indeed extend beyond side walls of the load engager with deleterious effects, if we rely entirely upon spring links however closely such are in guiding relation with the roller axle/bogie cross-connections/bogie studs. Such guard has been afforded by inextensible limiting means for the springs links comprising a wire link extending from below the load engager ramps to the end of spring links, generally using U-shaped wire device with its bight captive under a said ramp.

The spring links are formed for engagement adjacent each side of bogie side walls by a unitary construction of spring steel, in sheet form with a first part to be clamped under ramp parts of the bogie and parts extending to each side of a such ramp part, those extending parts being returned on themselves at a suitable distance from the first part, and, further returned after a distance corresponding to maximum displacement of their engagers, e.g. roller axles, in climbing of ramp parts, then brought back to the first return bend to define a slot corresponding to the aforesaid maximum displacement, and yet further again returned through such first return bend and then, desirably, along the first mentioned extension.

However, an alternative to the aforesaid spring retention means and limiting means therefor was proposed in our earlier patent application EP 1251056 to provide the desired positive retention and achieve the desired limit on movement. In the alternative it was proposed that the positive retention means comprise an anchor element fixed to the load engager and at least one other inextendable relatively movable element mounted for pivotal movement with respect to the anchor element and having a slot to receive an axle or some other cross connection of the roller means so as to move during relative movement of the engager and bogie assembly, and wherein said relatively movable component has abutment means that is cooperable with the load engager to limit articulation of the relatively movable component.

It has been found that this alternative arrangement is complicated to manufacture and the increase of parts leads to less reliability for the harsh conditions in which load handling trolleys of this type are generally used.

Another example of a load handling trolley, having the pre-characterising features of claim that follows, is shown in EP0133042A.

An object of the invention is to provide a load handling trolley of the type described having facility for greater lift and simpler positive retention means between the engager and bogie assembly.

According to the invention there is provided a load handling trolley of the type that normally runs in a channel led track comprising an elongate load engager having a load receiving top and depending side walls and which is raisable and lowerable relative to at least one bogie assembly via ramp and roller means when the engager and the bogie assembly are caused to move longitudinally relative to each other, **characterised in that** the bogie assembly has at least one side wall with a projection above a top edge of a major portion of its length, whereby positive retention between the load engager and the bogie assembly is made in the lowered position of the load engager with respect to the bogie assembly, and positive retention is still made when a bottom edge of a load engager side wall is raised to the height of said top edge of the bogie side wall, and wherein the projection is accommodated by the top of the load engager when in the lowered position.

A positive retention means preferably comprises a groove and peg arrangement between the inside of a side of the load engager and an outer side of a side of the bogie assembly. Ideally the groove will be on the bogie and the peg on the load engager.

The projection is preferably accommodated in an aperture of the load engager top.

The groove preferably has a major portion corresponding to the slope of the ramp. A lower portion of the groove is preferably parallel with a bottom edge of a bogie side wall. The lower portion of the groove preferably has a closed end.

The groove preferably has an upper portion parallel with the top edge of a side wall of the bogie assembly. The upper portion of the groove preferably has an open end for fitting the bogie assembly to the load engager.

In practice this means that the load engager can be raised a greater distance relative to the bogies than in prior art load handling trolleys of this general type.

This invention will now be further described, by way of example only, with reference to the accompanying drawings, in which:

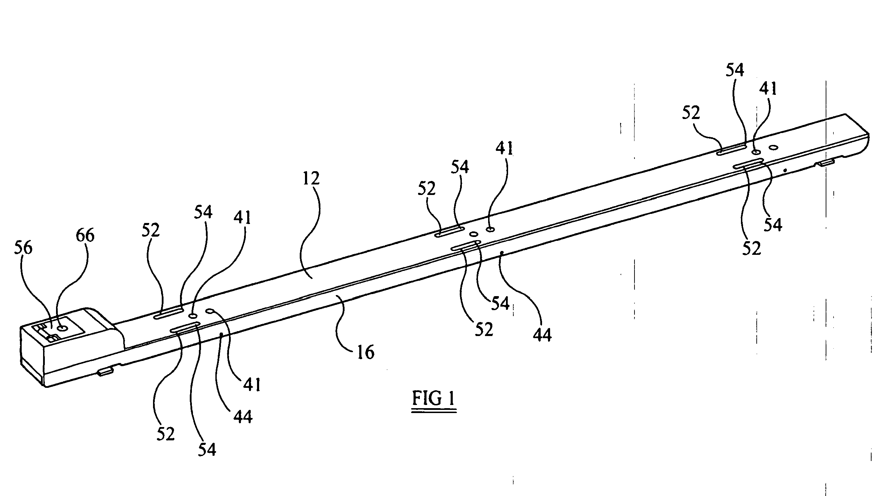

Figure 1 shows a load handling trolley of the invention;
Figure 2 is a section through the load handling trolley of Figure 1 in its lowered position;
Figure 3 is an underside view of the trolley of Figure 1;
Figure 4 is a section through the trolley of Figure 1. in the raised position;
Figure 5 is an exploded view of the trolley of Figure 1; and
Figure 6 shows a part of the trolley of Figure 1.

Referring to the accompanying drawings, a load handling trolley 10 has a load engager 12 of inverted channel section, so that its web 14 will be upwards to engage a load and its side walls 16, 18 will depend downwardly. Between the side walls 16, 18 and in closely adjacent clearance thereto are bogie assemblies 20. The bogie assemblies 20 have spaced sides 22, 24 interconnected by studs 26, rollers 28 and journalled rods 30 for articulation links 32 between bogie assemblies 20, of which there are at least two per load engager, i.e. per trolley extension unit also available under the JOLODA trade mark.

The studs 26 also interconnect means 34 for raising and lowering the bogie assemblies situated between the bogie side walls. The means 34 comprises a pair of spaced walls 36 having a roller 38 mounted therebetween. Associated with the roller 38 is a ramp 40 secured to the underside of the load engager 12 by screws 41, whereby, from a lowered position, movement of the bogie assemblies 20 along the load engager 12 causes the roller 38 to move over the ramp 40 to urge the load engager upwards relative to the bogie assemblies.

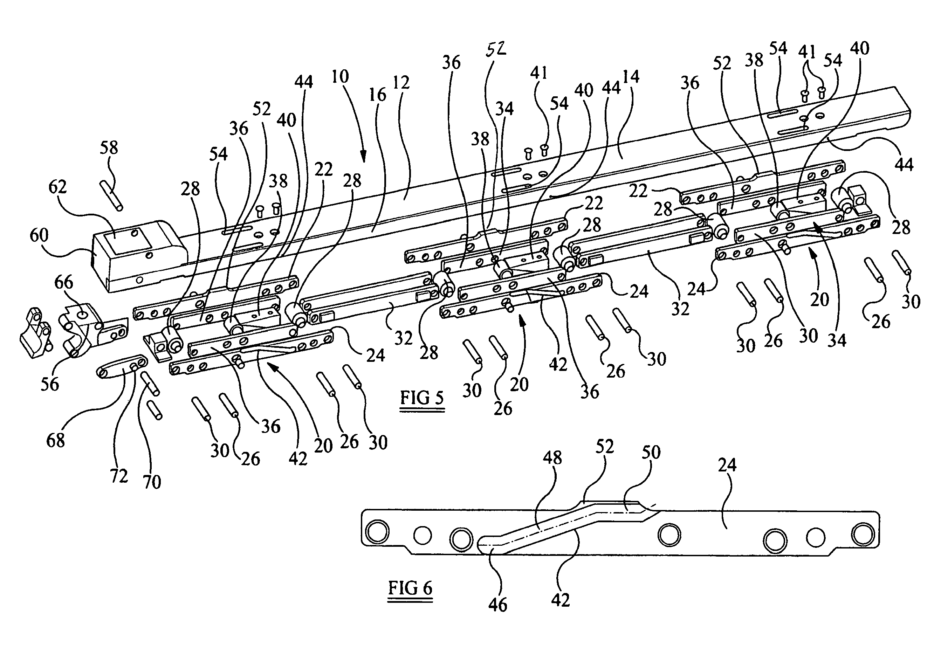

Outside faces of the sides 22, 24 of the bogie assemblies 20 have grooves 42 therein (see Figure 6), along which pins or pegs 44 on the inside faces of the load engager side walls 16,18 travel as the load engager moves upwardly or downwardly relative to the bogie assemblies. The grooves 42 have a first lower part 46 parallel to the lower edges of the sides 22, 24 of the bogie assemblies 20, an angled major portion 48 corresponding to the slope of the ramp 40 and an upper portion 50 parallel to the top edge of the sides of the bogie assemblies. The upper portion 50 occupies a projection 52 extending above the major part of the top edge of the sides of the bogie assemblies. The end of the lower part 46 of the groove 42 is closed, whilst the end of the upper part 50 of the groove 42 is open to allow fitting of the bogie assemblies to the load engager.

In order to provide maximum elevation of the load engager 12 relative to the bogie assemblies 20, the projections 52 of the sides of the bogie assemblies 20 are accommodated in the lowered position in apertures 54 in the top of the load engager 12, so as not to be proud thereof. When the bogie assemblies 20 are moved longitudinally relative to the load engager 12, the grooves 42 in the projections 52 allow the load engager to be raised higher than would be possible with conventional bogie assembly sides.

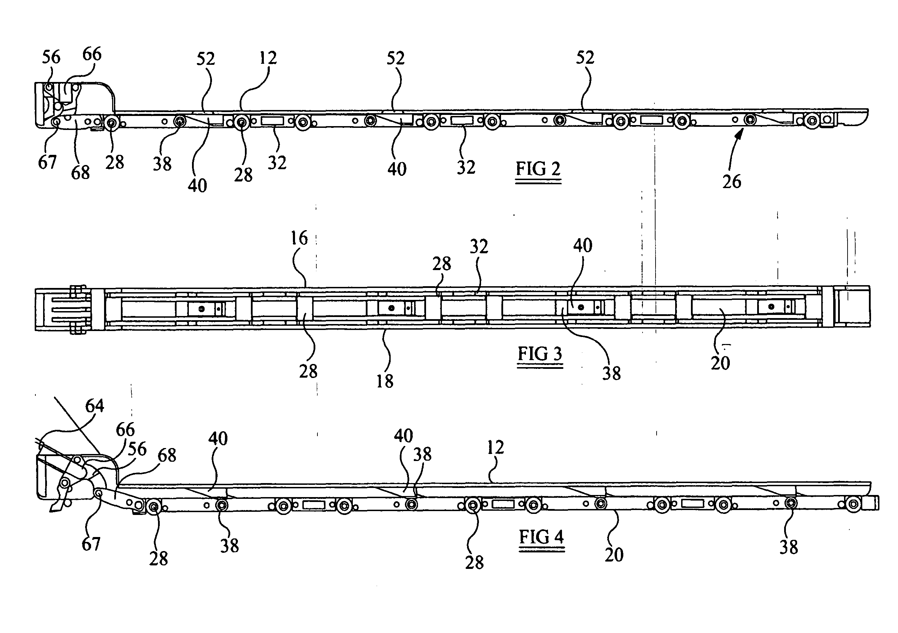

As shown the mechanism for moving the bogie assemblies 20 longitudinally relative to the load engager is conventional A crank 56 is pivotally connected between the side walls 16, 18 of the load engager 12 to pivot about a pin 58, so as to be movable between the positions illustrated in Figures 2 and 4. The side walls 16, 18 of the load engager arc connected by an end wall 60 and the top of the load engager at its end is open at 62 to receive an operating lever 64 that engages in hole 66 in the top of the crank 56. Pivotally connected at axis 67 to the crank is a pair of laterally spaced links 68. The pair of crank links 68 is pivotally connected to a respective one of the sides 22, 24 of the bogie assembly 20 by way of a pivot pin connection 70. Each crank link 68 carries a pivot pin 72, which acts as an abutment.

In Figure 2 the mechanism is shown with the load engager 12 in its lowered position. When it is required to elevate the load engager relative to the track the operating lever 64 is inserted into the crank 56 and pivoted anti-clockwise in the illustrated embodiment to move the crank and thus displace the bogie assembly 20 longitudinally by action of the link. As previously described the displacement of the bogie assembly causes the ramp 40 to be raised by the roller 38 and hence the load engager is moved to a raised position as shown in Figure 4 of the drawings for movement of the load handling trolley along the track. The maximum displacement is such as to move the pins 44 along the grooves 42 to their upper portions 50.

Where the rollers 28 are in contact with the track in normal operation of the load handling trolley, a clearance remains between the pin 72 and the end surface of the bogie assembly sides 22, 24. In the situation where the load handling trolley projects beyond the end of the track, the absence of the abutment pin 72 would result in the considerable angular displacement between the link 68 and the bogie assembly 20. However, by providing the abutment pin 72, angular movement is constrained and, therefore, despite the fact that the end bogie is not sufficiently supported, longitudinal movement is generated to give the desired lift by movement of the roller 38 against the ramp 40.

## Claims

1. A load handling trolley (10) of the type that normally runs in a channel led track comprising an elongate load engager (12) having a load receiving top and depending side walls (16,18) and which is raisable and lowerable relative to at least one bogie assembly (20) via ramp(40) and roller (38) means when the engager (12) and the bogie assembly (20) are caused to move longitudinally relative to each other, **characterised in that** the bogie assembly (20) has at least one side wall(22,24) with a projection(52) above a top edge of a major portion of its length, whereby positive retention between the load engager (12) and the bogie assembly (20) is made in the lowered position of the load engager with respect to the bogie assembly, and positive retention is still made when a bottom edge of a load engager side wall (16,18) is raised to the height of said top edge of the bogie side wall (22,24), and wherein the projection (52) is accommodated by the top of the load engager (12) when in the lowered position.

2. A load handling trolley (10) as claimed in claim 1, wherein a positive retention means comprises a groove (42) and peg (44) arrangement between the inside of a side of the load engager (16,18) and an outer side of a side of the bogie assembly (22,24).

3. A load handling trolley (10) as claimed in claim 2, wherein the groove (42) is on the bogie (20) and the peg(44) is on the load engager (12).

4. A load handling trolley (10) as claimed in claim 1, 2 or 3, wherein the projection (52) is accommodated in an aperture (54) of the load engager (12) top.

5. A load handling trolley as claimed in claim 2, 3 or 4, wherein the groove (42) has a major portion (48) corresponding to the slope of the ramp (40).

6. A load handling trolley (10) as claimed in any one of claims 2 to 5, wherein the groove (42) has a lower portion (46) parallel with a bottom edge of a bogie side wall (22, 24).

7. A load handling trolley (10) as claimed in claim 6, wherein the lower portion (46) of the groove (42) has a closed end.

8. A load handling trolley (10) as claimed in any one of claims 2 to 7, wherein the groove (42) has an upper portion (50) parallel with the top edge of a side wall (16, 18) of the bogie assembly (20).

9. A load handling trolley (10) as claimed in claim 8 wherein the upper portion (50) of the groove (42) has an open end.

## Patentansprüche

1. Lastförderwagen (10) des Typs, der gewöhnlich auf einer Rillenspur läuft, umfassend einen länglichen Lastaufnehmer (12) mit einem Last aufnehmenden Oberteil und davon ausgehenden Seitenwänden (16, 18) und der über Rampen- (40) und Rollen-(38) Mittel heb- und senkbar bezüglich mindestens einer Fahrgestellanordnung (20) ist, wenn der Aufnehmer (12) und die Fahrgestellanordnung (20) in Längsrichtung bezüglich einander bewegt werden, **dadurch gekennzeichnet, dass** die Fahrgestellanordnung (20) mindestens eine Seitenwand (22, 24) mit einer Nase (52) über einem oberen Rand eines Hauptteils ihrer Länge aufweist, wobei eine positive Befestigung zwischen dem Lastaufnehmer (12) und der Fahrgestellanordnung (20) in der gesenkten Position des Lastaufnehmers in Bezug auf die Fahrgestellanordnung gewährleistet wird, und eine positive Befestigung noch immer gewährleistet wird, wenn ein unterer Rand einer Seitenwand (16, 18) des Lastaufnehmers auf die Höhe des oberen Rands der Seitenwand des Fahrgestells (22, 24) gehoben wird, und wobei die Nase (52) im Oberteil des Lastaufnehmers (12) aufgenommen wird, wenn er sich in der gesenkten Position befindet.

2. Lastförderwagen (10) nach Anspruch 1, wobei ein Mittel für eine positive Befestigung eine Nut- (42) und eine Zapfen- (44) Anordnung zwischen der Innenseite einer Seite des Lastaufnehmers (16, 18) und einer Aussenseite einer Seite des Fahrgestells (22, 24) umfasst.

3. Lastförderwagen (10) nach Anspruch 2, wobei sich die Nut (42) auf dem Fahrgestell (20) und der Zapfen (44) auf dem Lastaufnehmer (12) befindet.

4. Lastförderwagen (10) nach Anspruch 1, 2 oder 3, wobei die Nase (52) in einer Öffnung (54) des Oberteils des Lastaufnehmers (12) aufgenommen wird.

5. Lastförderwagen (10) nach Anspruch 2, 3 oder 4, wobei die Nut (42) einen Hauptteil (48) aufweist, der der Neigung der Rampe (40) entspricht.

6. Lastförderwagen (10) nach einem der Ansprüche 2 bis 5, wobei die Nut (42) einen unteren Teil (46) aufweist, der parallel mit einem unteren Rand einer Seitenwand des Fahrgestells (22, 24) verläuft.

7. Lastförderwagen (10) nach Anspruch 6, wobei der untere Teil (46) der Nut (42) ein geschlossenes Ende aufweist.

8. Lastförderwagen (10) nach einem der Ansprüche 2 bis 7, wobei die Nut (42) einen oberen Teil (50) aufweist, der Parallel mit dem oberen Rand einer Seitenwand (16, 18) der Fahrgestellanordnung (20) verläuft.

9. Lastfördemagen (10) nach Anspruch 8, wobei der obere Teil (50) der Nut (42) ein offenes Ende aufweist.

## Revendications

1. Chariot de manipulation de charges (10) du type à déplacement sur une piste striée, comprenant un organe d'engagement de charge allongé (12) comportant une partie supérieure de réception de charge et des parois latérales partant de celle-ci (16, 18) et qui peut être abaissée et levée par rapport à au moins un ensemble de bogie (20) par l'intermédiaire de moyens formant rampe (40) et des moyens de roulement (38) lorsque l'organe d'engagement (12) et l'ensemble de bogie (20) sont amenés à se déplacer longitudinalement l'un par rapport à l'autre, **caractérisé en ce que** l'ensemble de bogie (20) comporte au moins une paroi latérale (22, 24) avec une saillie (52) au-dessus d'un bord supérieur d'une portion majeure de sa longueur, une rétention positive entre l'organe d'engagement de charge (12) et l'ensemble de bogie (20) étant effectuée dans la position abaissée de l'organe d'engagement de charge par rapport à l'ensemble de bogie, et une rétention positive est encore effectuée lorsqu'un bord inférieur d'une paroi latérale (16, 18) de l'organe d'engagement de charge est élevé à la hauteur dudit bord supérieur de la paroi latérale du bogie (22, 24), et dans lequel la saillie (52) est logée dans la partie supérieure de l'organe d'engagement de charge (12) lorsqu'il se trouve dans la position abaissée.

2. Chariot de manipulation de charges (10) selon la revendication 1, dans lequel un moyen de rétention positive comprend un assemblage de rainure (42) et de patère (44) entre l'intérieur d'un coté de l'organe d'engagement de charge (16, 18) et un côté extérieur d'un côté de l'ensemble de bogie (22, 24).

3. Chariot de manipulation de charges (10) selon la revendication 2, dans lequel la rainure (42) est sur le bogie (20) et la patère (44) est sur l'organe d'engagement de charge (12).

4. Chariot de manipulation de charges (10) selon la revendication 1, 2 ou 3, dans lequel la saillie (52) est logée dans une ouverture (54) de la partie supérieure de l'organe d'engagement de charge (12).

5. Chariot de manipulation de charges (10) selon la revendication 2, 3 ou 4, dans lequel la rainure (42) comporte une portion principale (48) correspondant à l'inclinaison de la rampe (40).

6. Chariot de manipulation de charges (10) selon l'une quelconque des revendications 2 à 5, dans lequel la rainure (42) comporte une portion inférieure (46) parallèle à un bord inférieur d'une paroi latérale du bogie (22, 24).

7. Chariot de manipulation de charges (10) selon la revendication 6, dans lequel la portion inférieure (46) de la rainure (42) a une extrémité fermée

8. Chariot de manipulation de charges (10) selon l'une quelconque des revendications 2 à 7, dans lequel la rainure (42) a une portion supérieure (50) parallèle au bord supérieur d'une paroi latérale (16, 18) de l'ensemble de bogie (20).

9. Chariot de manipulation de charges (10) selon la revendication 8, dans lequel la partie supérieure (50) de la rainure (42) a une extrémité ouverte.
